# EUROPÄISCHE PATENTSCHRIFT

(11) **EP 2 040 915 B1**
(45) Veröffentlichungstag und Bekanntmachung des Hinweises auf die Patenterteilung: **20.02.2013**
(21) Anmeldenummer: 07784578.2
(22) Anmeldetag: 05.07.2007
(51) Int. Cl.: B32B 7/06, B65D 77/20

(54) **VERBUNDMATERIAL, VERFAHREN ZU DESSEN HERSTELLUNG SOWIE DESSEN VERWENDUNG ALS VERPACKUNGSMATERIAL**
COMPOSITE MATERIAL, METHOD FOR THE PRODUCTION THEREOF, AND USE OF THE SAME AS PACKING MATERIAL
MATÉRIAU COMPOSITE, PROCÉDÉ DE FABRICATION ET UTILISATION DUDIT MATÉRIAU COMME MATÉRIAU D'EMBALLAGE

(30) Priorität: 13.07.2006 AT 11962006
(43) Veröffentlichungstag der Anmeldung: 01.04.2009
(73) Patentinhaber: Constantia Teich GmbH, 3200 Weinburg (AT)
(72) Erfinder: KORNFELD, Martin, 3400 Klosterneuburg (AT); WEGENBERGER, Alfred, 3550 Langenlois (AT); NEKULA, Lambert, 3202 Hofstätten (AT); SCHEDL, Adolf, 3200 Obergrafendorf (AT)
(74) Vertreter: Dungler, Karin
(86) Internationale Anmeldenummer: PCT/AT2007/000337
(87) Internationale Veröffentlichungsnummer: WO 2008/006123

(56) Entgegenhaltungen:
- EP-A- 1 559 658
- WO-A-96/05056
- WO-A-98/25760

## Beschreibung

Die Erfindung betrifft ein Verbundmaterial umfassend eine Trägerschicht und eine Siegelschicht, wobei die Trägerschicht mit der Siegelschicht lösbar verbunden ist. Die Erfindung betrifft ebenso ein Verfahren zur Herstellung des erfindungsgemäßen Verbundmaterials. Weiters betrifft die Erfindung die Verwendung des erfindungsgemäßen Verbundmaterials als Verpackungsmaterial.

Verbundmaterialien der eingangs genannten Art eignen sich für eine Reihe von Verwendungszwecken, insbesondere zum Verschließen von Verpackungen, wie Nahrungsmittelbehälter. Üblicherweise werden Nahrungsmittelbehälter, wie Joghurtbecher, mit Monofolien, sogenannte Deckelplatinen, verschlossen. Dabei wird die Deckelplatine am Behälterrand mittels einer Siegelschicht verschweißt. Beim Öffnen ist es erforderlich, die Siegelkräfte zwischen Deckelplatine und Behälterrand zu überwinden, sodass die Deckelplatine insgesamt vom Behälter abgezogen werden kann. Dieser Öffnungsmechanismus verläuft bei relativ festem Packungsgut unproblematisch, wogegen flüssiges Packungsgut, wie Molkegetränke, leicht verschüttet wird. Man ist daher dazu übergegangen, zweilagige Deckelplatinen bereitzustellen, welche eine Trägerschicht und eine Siegelschicht umfassen. Werden diese beiden Schichten von einander getrennt, können Öffnungen gebildet werden, welche die Entnahme des Packungsgutes erleichtern. Allerdings muss bei dieser Verpackungsform ein Kompromiss einerseits zwischen der Lösbarkeit (Peelfähigkeit) der Schichten von einander und anderseits der Lösbarkeit (Peelfähigkeit) der Siegelschicht vom Behälterrand gefunden werden.

WO98/25760 offenbart ein Verbundmaterial zum Verschließen von Fleischverpackungen, das einen zweischichtigen Deckel umfaßt. Der koextrudierte Deckel besteht aus einer polaren Schicht und einer unpolaren Schicht, wobei die zwei Schichten voneinander delaminieren, wenn sie einer Delaminationskraft unterworfen werden. Die polare Schicht ist aus Polyethylenhomo-oder Copolymer, die unpolare Schicht wird aus Polyamid, PET, EVOH, PVC, Polybutylen, PU und Polysulfon ausgewählt

Der vorliegenden Erfindung liegt daher die Aufgabe zugrunde, ein Verbundmaterial umfassend eine Trägerschicht und eine Siegelschicht bereitzustellen, wobei die Trägerschicht mit der Siegelschicht lösbar verbunden ist, jedoch die Siegelschicht trotz des Ablösens und der dabei aufgewendeten Kraft weiterhin am Behälterrand haften bleibt.

Erfindungsgemäß wird ein Verbundmaterial der eingangs genannten Art vorgeschlagen, welches dadurch gekennzeichnet ist, dass zur Ausbildung einer Trennzone zwischen Trägerschicht und Siegelschicht zumindest der Oberflächenbereich der Trägerschicht, welcher an die Siegelschicht angrenzt, unpolare Stoffe und zumindest der Oberflächenbereich der Siegelschicht, welcher an die Trägerschicht angrenzt, polare Stoffe umfasst oder dass zumindest der Oberflächenbereich der Trägerschicht, welcher an die Siegelschicht angrenzt, polare Stoffe und zumindest der Oberflächenbereich der Siegelschicht, welcher an die Trägerschicht angrenzt, unpolare Stoffe umfasst. Diese erfindungsgemäße Auswahl an Stoffen bewirkt, dass auf Grund der unterschiedlichen Polarität eine eingeschränkte Verträglichkeit zwischen den Stoffen der Trägerschicht einerseits und der Siegelschicht andererseits vorliegt. Dadurch entsteht ein Verbund, der durch Anwendung von Kraft, beispielsweise beim Abschälen (Peelen) der Trägerschicht von der Siegelschicht wiederum gelöst werden kann. Das Ablösen der Schichten voneinander erfolgt innerhalb einer Trennzone, sodass bei Anwendung von Kraft eine klare Trennung zwischen der Trägerschicht einerseits und der Siegelschicht anderseits erfolgt, ohne dass die eingesetzten Materialien zerstört werden oder aber die Siegelschicht vorzeitig vom Behälterrand abgelöst wird.

Weitere Ausgestaltungen des erfindungsgemäßen Verbundmaterials sind gemäß Unteransprüche offenbart. So weist die Trägerschicht vorzugsweise eine Außenschicht auf, die aus einer Schicht aus Haftvermittler und einer Trennschicht besteht. Bei dieser Ausführungsform umfasst die Trennschicht polare oder unpolare Stoffe.

Eine erfindungsgemäße Verfahrensvariante zur Herstellung des erfindungsgemäßen Verbundes besteht darin, dass auf eine Trägerschicht durch Kaschieren, Lackieren oder Extrudieren die Siegelschicht aufgebracht wird.

Eine weitere mögliche Verfahrensvariante besteht darin, dass die Trägerschicht als Vorverbund bestehend aus dem Trägermaterial und einer Außenschicht gebildet wird, wobei die Außenschicht aus einer Schicht aus Haftvermittler und einer Trennschicht gebildet wird. Anschließend wird auf die Außenschicht durch Kaschieren, Lackieren oder Extrudieren die Siegelschicht aufgebracht. Dabei können an der Siegelschicht Sollbruchstellen durch Einstanzen, Anstanzen, Siegeldruck oder Laser erzeugt werden.

Die Sollbruchstellen können aber auch am endgefertigten Produkt erzeugt werden und zwar dann, wenn das erfindungsgemäße Verbundmaterial mittels Siegelwerkzeugen auf einen Behälter gesiegelt wird. Durch Anwendung von erhöhtem Druck und erhöhter Temperatur ist es bei gezielter Auswahl der in der Siegelschicht eingesetzten Stoffe möglich, dass diese im Bereich der Siegelbacken des Siegelwerkzeuges gezielt durchtrennt werden, sodass beim Abschälen der Trägerschicht von der Siegelschicht eine definierte Entnahmeöffnung, welche durch die Ausmaße des Siegelwerkzeuges vorgegeben ist, entsteht.

Weitere vorteilhafte Ausgestaltungen des erfindungsgemäßen Verfahren sind gemäß Unteransprüche offenbart.

Die Erfindung betrifft weiters die Verwendung des erfindungsgemäßen Verbundmaterials als Verpackungsmaterial, insbesondere zum Verschließen von Behältern. Dabei wird das Verbundmaterial über die Siegelschicht mit einem Behälter verschweißt. Die Trägerschicht ist dem Verbraucher zugewandt und kann gegebenenfalls Aufreißhilfen, wie Grifflaschen, zeigen. Mittels dieser Aufreißhilfe kann nunmehr der Verbraucher die Trägerschicht von der Siegelschicht abtrennen (peelen), sodass die beiden Lagen materialmäßig sauber innerhalb der Trennzone voneinander abgetrennt werden. Durch die angewandten Kräfte reißt die Siegelschicht entlang der Sollbruchstellen ein, sodass eine Öffnung für die Entnahme von Packungsgut ausgebildet wird.

Weiters kann das erfindungsgemäße Verbundmaterial ebenso als Einwickelpackung, beispielsweise für Schokolade, verwendet werden. Bei dieser Verwendung können Sollbruchstellen in Form von Einreißstreifen im Siegelbereich der Schokoladepackung vorliegen, sodass auch hier ein erleichtertes Öffnen für den Verbraucher gewährleistet ist.

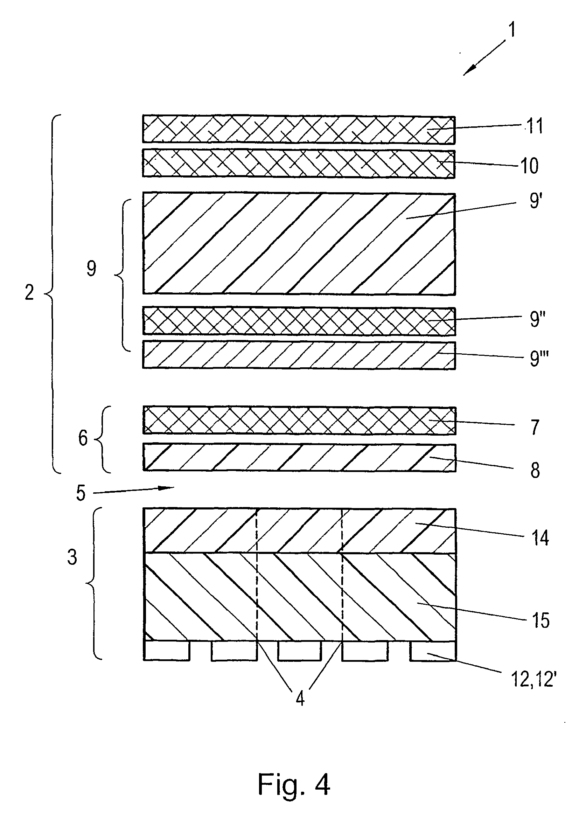

Die Erfindung wird im Folgenden anhand möglicher Ausführungsformen zur Durchführung der Erfindung näher erläutert. Diese möglichen Ausführungsformen sind in den Figuren 1 bis 5 dargestellt, wobei Fig. 1 das erfindungsgemäße Verbundmaterial bestehend aus Trägerschicht und Siegelschicht, die Fig. 2 bis 4 hingegen mögliche Verbundstrukturen für die Trägerschicht und die Siegelschicht und Fig. 5 eine mögliche Verwendung des erfindungsgemäßen Verbundmaterials zeigen.

### Ausführungsbeispiel 1:

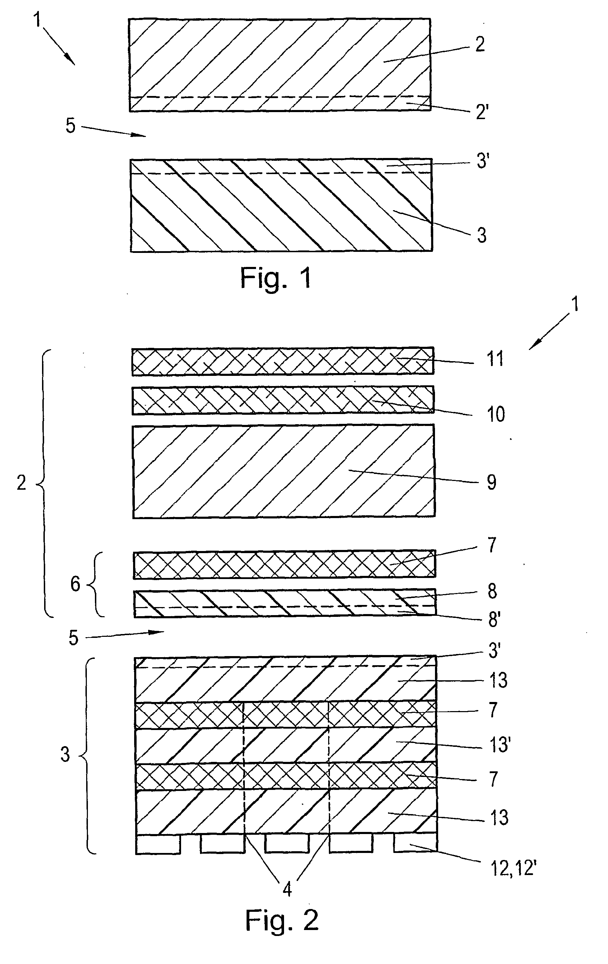

Gemäß Ausführungsbeispiel 1, welches anhand von Fig.1 näher erläutert wird, besteht die Trägerschicht 2 aus einem Monomaterial, beispielsweise Aluminium mit einer Dicke von etwa 40µm. Bei diesem Ausführungsbeispiel weist die Trägerschicht in ihrem Oberflächenbereich 2' deshalb polaren Charakter auf, da dort Aluminiumoxid vorliegt. Die Anreicherung von Aluminiumoxid erfolgt durch entsprechende Vorbehandlung der Aluminiumfolie, wie beispielsweise durch Vorheizen und/oder Coronabehandlung.

Gemäß diesem Ausführungsbeispiel besitzt die Siegelschicht 3 unpolaren Charakter. Zu diesem Zweck werden unpolare Polymere, wie Polyethylen oder Polypropylen eingesetzt. Aufgrund der unterschiedlichen Polarität im Oberflächenbereichen 2' und der Siegelschicht 3 wird die Verträglichkeit der Stoffe derart eingeschränkt, dass durch Anwendung von Kraft eine Trennzone 5 ausgebildet wird. Freilich ist es auch denkbar, die unpolaren Eigenschaften durch entsprechende Modifikation bzw. Vorbehandlung nur im Oberflächenbereich 3' einzustellen. Maßgeblich ist es jedenfalls, dass die polaren bzw. unpolaren Eigenschaften zumindest an der Oberfläche 2' bzw. 3' vorliegen, sodass die Trennzone 5 ausgebildet werden kann.

### Ausführungsbeispiel 2:

Ausführungsbeispiel 2 wird anhand von Fig. 2 näher erläutert, wobei zur Ausbildung der Trägerschicht 2 als Trägermaterial 9 eine Aluminiumfolie ausgewählt wird, welche an einer Außenseite mit einem Druckvorlack 10 versehen wird. Dieser Druckvorlack dient als Haftvermittler zwischen Drucklack 11 und Trägermaterial 9. Der Drucklack 11 kann durch übliche Verfahren, wie beispielsweise Offsetdruck, aufgebracht werden, und dient dazu, dem Verbraucher Informationen über Art und Inhalt des Packungsgutes zu geben. Auf die unbedruckte Seite des Trägermaterials 9 wird zur Ausbildung der Außenschicht 6 nunmehr ein Haftvermittler 7, beispielsweise durch Lackieren aufgebracht, auf welchen eine Trennschicht 8 aus Styrolbutadien, ebenso durch Lackieren, aufgebracht wird. Die polaren Eigenschaften werden durch Ausrichtung bzw. Anreicherung einzelner Molekülgruppen bzw. durch Zugabe von Additiven hauptsächlich im Oberflächenbereich 8' erzeugt, sodass die Trennzone 5 entsteht. Unabhängig davon soll die Außenschicht 6 das Trägermaterial 9 aus Aluminium gegen mögliche Korrosion schützen. Die unpolaren Eigenschaften der Siegelschicht 3 werden im Bereich 3' erzeugt, in welchem gemäß diesem Beispiel als Verbundlage 13 modifiziertes Polypropylen vorliegt. Die Verbundlage 13 grenzt über eine Haftvermittlerschicht an die Barrierelage 13', beispielsweise Polyamid an, welche über eine weitere Haftvermittlerschicht 7 an eine zweite Verbundlage 13 aus modifizierten Polypropylen angrenzt. Da eine üblicherweise glatte Siegelschicht bei der Lagerung von Verbundmaterialien auf Grund des so genannten Glasscheibeneffektes die weitere Handhabbarkeit, wie beispielsweise das Abrollen oder Entstapeln, erschwert, wird die Siegelschicht 3 üblicherweise mit Abstandshaltern 12, beispielsweise in Form eines Aufdruckes, versehen.

Anstelle der Abstandshalter 12 kann die Siegelschicht auch erwärmt und oberflächlich geprägt werden, sodass Prägestege 12'ausgebildet werden, welche in Form und Dimension den Abstandshaltern 12 entsprechen können. Durch das Einschließen von Luft zwischen den Prägestegen 12' wird die Entstapelbarkeit des Verbundmaterials wesentlich erleichtert.

Um die partielle Entnahme von Packungsgut zu erleichtern, werden durch Anstanzen die Sollbruchstellen 4 vorgesehen.

### Ausführungsbeispiel 3:

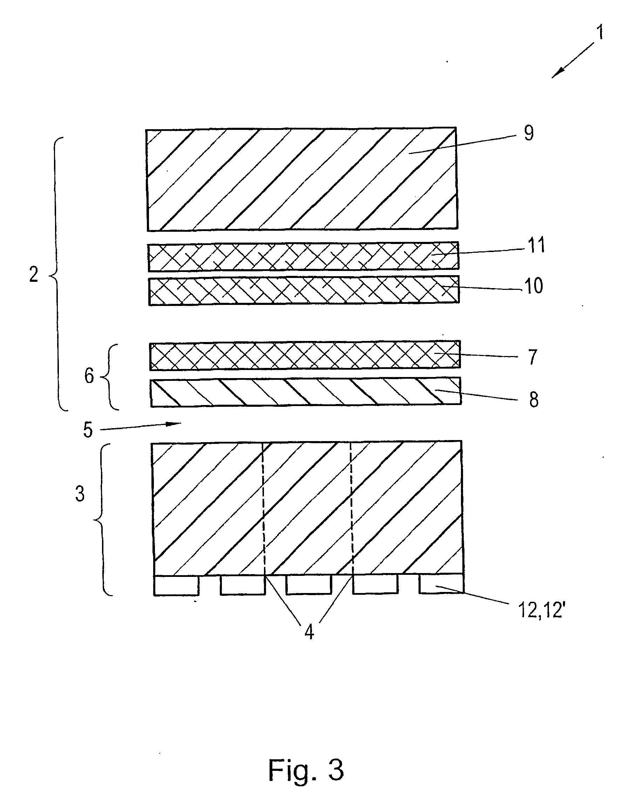

Ausführungsbeispiel 3 wird anhand von Fig. 3 näher erläutert. Zur Herstellung des erfindungsgemäßen Verbundmaterials nach Fig. 3 wird zur Ausbildung der Trägerschicht 2 als Trägermaterial 9 ein Polyester, nämlich Polyethylenterephthalat, in einer Schichtdicke von 7-50µm, gemäß Beispiel 36µm, eingesetzt. Dieses Trägermaterial wird an seiner Innenseite, d.h. im Wesentlichen an der der Siegelschicht 3 zugewandten Seite, mit einem Druckvorlack 10 und einem Widerdrucklack 11 versehen, sodass die Trägerschicht 2 gebildet wird. Es kann in diesem Fall ein Lacksystem als Trennschicht 8 eingesetzt werden, welches auf Grund seines polaren Charakters wiederum die erfindungsgemäß gewünschte Wechselwirkung mit der beispielsgemäß unpolaren Siegelschicht 3 zur Ausbildung der Trennzone 5 bewirkt. Zu diesem Zweck wird die Außenschicht 6 bestehend aus Trennschicht 8 und einer Haftvermittlerschicht 7 gebildet. Die unpolare Siegelschicht 3 besteht aus Polypropylen und weist wieder vorteilhafterweise Abstandshalter 12 oder Prägestege 12' auf, um das Entstapeln zu erleichtern. Die gezeigten Sollbruchstellen 4 können bei Verwendung des Verbundmaterials als Deckelelement ausgebildet werden, wobei auf Grund besonderer Siegelwerkzeuge beim Aufsiegeln des Verbundmaterials auf den Becher ein materialmäßiges Verdrängen innerhalb der Polypropylenschicht erfolgt, sodass die Sollbruchstellen 4 ausgebildet werden.

### Ausführungsbeispiel 4:

Gemäß Ausführungsbeispiel 4 wird zur Ausbildung der Trägerschicht 2 als Trägermaterial 9 ein Verbund, bestehend aus einer Polyethylenterephthalat-Folie 9', einem Kaschierkleber 9" und einer Papierschicht 9''' eingesetzt. An einer nach außen liegenden Seite wird die Polyethylenterephthalat-Schicht 9' mit einem Druckvorlack 10 versehen, auf welchem ein informeller Aufdruck mit Hilfe des Drucklackes 11 aufgebracht wird. Die Papierschicht 9''' wird mit einem Haftvermittler 7 versehen, auf welchem die unpolare Trennschicht 8, beispielsweise eine Polyethylenbeschichtung, aufgetragen wird, wobei die Außenschicht 6 gebildet wird. Gemäß diesem Ausführungsbeispiel besteht die Siegelschicht 3 aus einem Verbund, nämlich einer Lage 14 aus modifiziertem Polyethylen-Copolymer und einer Lage 15 aus unmodifiziertem Polyethylen-Copolymer. Dabei werden die polaren Eigenschaften der Siegelschicht durch das in der Lage 14 eingesetzte modifizierte Polyethylen-Copolymer erzeugt, wobei an der Lage 15 die Abstandshalter 12 bzw. Prägestege 12' angebracht werden.

Unabhängig von den vorgenannten Ausführungsbeispielen ist es weiters möglich, die polaren Eigenschaften der Siegelschicht 3 bzw. der Trägerschicht 2 durch Zugabe von Additiven einzustellen. Bei diesen Additiven handelt es sich vorwiegend um niedermolekulare Verbindungen, welche ein unpolares und ein polares Ende aufweisen. Mischt man ein derartiges Additiv z.B. Ölsäureamid oder Erucasäureamid mit einem unpolaren Polyethylen, so bleibt das unpolare Additiv im Polyethylen verankert, wogegen das polare Ende sich auf Grund seiner Unverträglichkeit mit Polyethylen im erhöhten Ausmaß an der Oberfläche anlagert und somit die Haftung herabsetzt. Auch die Zugabe von Antiblockmitteln, wie z.B. Kieselsäure, beeinflusst die Verträglichkeit zwischen den jeweiligen Kunststoffen in der Siegelschicht 3 bzw. Trägerschicht 2.

Weiters ist es möglich, die polaren Eigenschaften der Trägerschicht 2 bzw. Siegelschicht 3 durch Oberflächenmodifikation, wie Beflammen oder Coronabehandlung einzustellen. In beiden Verfahren werden durch den Energieeintrag auf der Kunststoffoberfläche Oxidationsvorgänge ausgelöst, die beispielsweise eine bessere Haftung bewirken.

Ebenso ist es möglich, Kunststoffe wie Polyethylen bei Temperaturen oberhalb von 300°C zu verarbeiten. Beim Austritt des Schmelzefilmes aus der Extrusionsdüse tritt bei derart hohen Temperaturen Oxidation auf Grund der Reaktion mit Luftsauerstoff auf, die ausreichend sein kann, dass Polyethylen ohne Haftvermittler auf Aluminium haftet. In einem derartigen Fall weist die Aluminiumoberfläche eine polare Oxidschicht (siehe dazu Ausführungbeispiel 1) auf, an welche das oxidierte Polyethylen anbindet bzw. anknüpft.

Für die weitere Verwendung des erfindungsgemäßen Verbundmaterials 1 ist es nunmehr möglich, an der Siegelschicht 3 mittels Laser die Sollbruchstellen 4 zu erzeugen, welche als materialmäßige Trennungen in der Siegelschicht in Form von Löchern vorliegen.

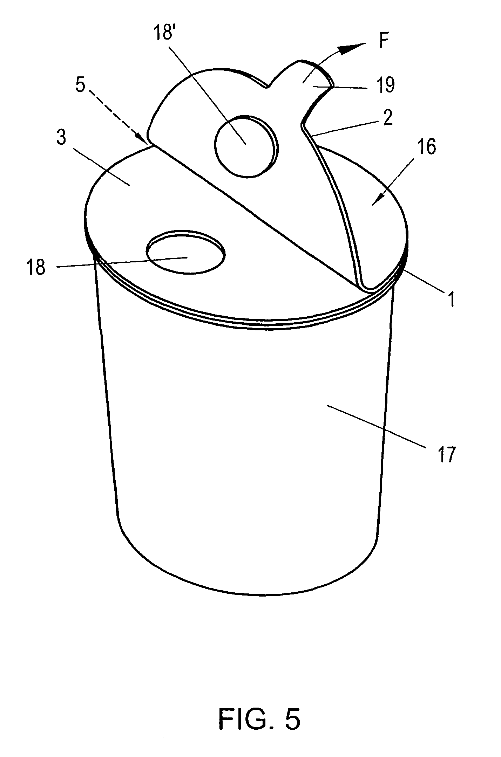

Anschließend kann das erfindungsgemäße Verbundmaterial 1 wie in Figur 5 gezeigt, als Deckelplatine 16 zum Verschließen von Behältern 17 eingesetzt werden. Dabei wird nach dem Befüllen des Behälters 17 mit Packungsgut, wie beispielsweise Joghurt, die Deckelplatine 16 durch Heißsiegeln mit dem Behälterrand verschweißt. Für diesen Siegelvorgang muss gewährleistet sein, dass die mit dem Behälter verschweißte Schicht, nämlich die Siegelschicht 3 eine feste, nicht ablösbare Verbindung ergibt. Gleichzeitig soll sich jedoch im Bereich der Trennzone 5 die Trägerschicht 2 von der Siegelschicht 3 abziehen lassen. Dies erfolgt insoferne, als der Verbraucher die Deckelplatine 16 im Bereich der Grifflasche 19 anfasst und durch Anwendung von Kräften diese in Richtung des Pfeiles F abzieht. Da das erfindungsgemäße Verbundmaterial 1 bereits bei dessen Herstellung mit Sollbruchstellen 4, wie in den Ausführungsbeispielen dargelegt, versehen ist, kann nunmehr, bedingt durch die angewandten Kräfte, eine Entnahmeöffnung 18 ausgebildet werden. Der der Entnahmeöffnung 18 entsprechende abgelöste Bereich 18' bleibt hingegen an der Trägerschicht 2 haften. Somit kann im Bereich der Sollbruchstellen 4, welche auch durch Laser erzeugt werden können, eine Entnahmeöffnung 18 gebildet werden, welche es dem Verbraucher erleichtert, Packungsgut zur Gänze oder auch nur teilweise entnehmen zu können.

Die erfindungsgemäße Materialauswahl an polaren oder unpolaren Stoffen muss dabei derart vorgenommen werden, dass die Trägerschicht zwar von der Siegelschicht abgelöst wird, jedoch die Siegelschicht weiterhin am Becherrand haften bleibt.

Zusammenfassend kann gesagt werden, dass das erfindungsgemäße Verbundmaterial auf Grund der spezifischen Auswahl von polaren bzw. unpolaren Stoffen aus zwei voneinander materialmäßig getrennten Schichten besteht, welche während der Herstellung und auch bei Verwendung einen festen Materialverbund darstellen, jedoch bei Anwendung von Kräften, so genannten Schälkräften, wodurch die Trägerschicht von einer weiteren Schicht, entweder der Siegelschicht oder einer Trennschicht abgezogen wird, dieser Materialverbund in einfacher Weise gelöst werden kann. Bei Vorliegen einer Trennschicht, welche eine der Funktionen als unpolares oder polares Schichtmaterial übernimmt, ist es zusätzlich gewährleistet, dass die Sollbruchstellen in der Siegelschicht durch eine in sich durchgehende Schicht geschützt werden, sodass das Trägermaterial, beispielsweise Aluminium, gegen Korrosion geschützt ist.

## Patentansprüche

1. Verbundmaterial 1 umfassend eine Trägerschicht 2 und eine Siegelschicht 3, wobei die Trägerschicht 2 mit der Siegelschicht 3 lösbar verbunden ist, **dadurch gekennzeichnet, dass** zur Ausbildung einer Trennzone 5 zwischen Trägerschicht 2 und Siegelschicht 3 zumindest der Oberflächenbereich 2' der Trägerschicht 2, welcher an die Siegelschicht 3 angrenzt, unpolare Stoffe und zumindest der Oberflächenbereich 3' der Siegelschicht 3, welcher an die Trägerschicht 2 angrenzt, polare Stoffe umfasst oder dass zumindest der Oberflächenbereich 2' der Trägerschicht 2, welcher an die Siegelschicht 3 angrenzt, polare Stoffe und zumindest der Oberflächenbereich 3' der Siegelschicht 3, welcher an die Trägerschicht 2 angrenzt, unpolare Stoffe umfasst.

2. Verbundmaterial nach Anspruch 1, **dadurch gekennzeichnet, dass** das Trägermaterial 9 für die Ausbildung der Trägerschicht 2 als Monomaterial mit einer Schichtdicke von 7-150µm, vorzugsweise 20-70µm, vorliegt.

3. Verbundmaterial nach Anspruch 1, **dadurch gekennzeichnet, dass** das Trägermaterial 9 für die Ausbildung der Trägerschicht 2 als Verbund mit einer Schichtdicke von 20-150µm, vorzugsweise 50-70µm, vorliegt.

4. Verbundmaterial nach einem der Ansprüche 1 bis 3, **dadurch gekennzeichnet, dass** das Trägermaterial 9 ein- und/oder beidseitig bedruckt ist.

5. Verbundmaterial nach einem der Ansprüche 1 bis 4, **dadurch gekennzeichnet, dass** die Siegelschicht 3 als Monomaterial mit einer Schichtdicke von 15-150µm, vorzugsweise 30-70µm, vorliegt.

6. Verbundmaterial nach einem der Ansprüche 1 bis 4, **dadurch gekennzeichnet, dass** die Siegelschicht 3 als Verbund mit einer Gesamtdicke von 20-250µm, vorzugsweise 30-70µm, vorliegt.

7. Verbundmaterial nach einem der Ansprüche 1 bis 6, **dadurch gekennzeichnet, dass** die Siegelschicht 3 Zusatzstoffe, wie Farbstoffe und/oder Füllmittel, aufweist.

8. Verbundmaterial nach einem der Ansprüche 1 bis 7, **dadurch gekennzeichnet, dass** die Siegelschicht 3 Sollbruchstellen 4 in Form von Anstanzungen, Durchstanzungen oder Löchern aufweist.

9. Verbundmaterial nach einem der Ansprüche 1 bis 8, **dadurch gekennzeichnet, dass** die Siegelschicht 3 an ihrer Außenseite oberflächenraue Abstandshalter 12 zeigt.

10. Verbundmaterial nach einem der Ansprüche 1 bis 8, **dadurch gekennzeichnet, dass** die Siegelschicht 3 an ihrer Außenseite Prägestege 12' zeigt.

11. Verbundmaterial nach einem der Ansprüche 1 bis 10, **dadurch gekennzeichnet, dass** das Trägermaterial 9 eine Außenschicht 6 mit einer Trennschicht 8 aufweist.

12. Verbundmaterial nach Anspruch 11, **dadurch gekennzeichnet, dass** für die Ausbildung der Trägerschicht 2 die Trennschicht 8 über einen Haftvermittler 7 mit dem Trägermaterial 9 verbunden ist.

13. Verbundmaterial nach Anspruch 11 oder 12, **dadurch gekennzeichnet, dass** die Trennschicht 8 in zumindest dem an die Siegelschicht 3 angrenzenden Oberflächenbereich 8' aus unpolaren Stoffen und die Siegelschicht 3 an zumindest dem an die Trennschicht 8 angrenzenden Oberflächenbereich 3' aus polaren Stoffen besteht.

14. Verbundmaterial nach Anspruch 11 oder 12, **dadurch gekennzeichnet, dass** die Trennschicht 8 in zumindest dem an die Siegelschicht angrenzenden Oberflächenbereich 8' aus polaren Stoffen und die Siegelschicht 3 an zumindest dem an die Trennschicht 8 angrenzenden Oberflächenbereich 3' aus unpolaren Stoffen besteht.

15. Verbundmaterial nach einem der Ansprüche 1 bis 14, **dadurch gekennzeichnet, dass** als unpolare Stoffe Polyethylen, Polypropylen, sowie deren unpolare Copolymere und unpolare Derivate ausgewählt werden.

16. Verbundmaterial nach einem der Ansprüche 1 bis 15, **dadurch gekennzeichnet, dass** als polare Stoffe Polyethylenterephtalat, Polyamid sowie Aluminium ausgewählt werden.

17. Verfahren zur Herstellung eines erfindungsgemäßen Verbundmaterials nach einem der Ansprüche 1 bis 16, **dadurch gekennzeichnet, dass** auf eine Trägerschicht 2 durch Lackieren und/oder Kaschieren und/oder Extrudieren die Siegelschicht 3 aufgebracht wird.

18. Verfahren zum Herstellen eines erfindungsgemäßen Verbundelementes nach einem der Ansprüche 1 bis 16, **dadurch gekennzeichnet, dass** die Trägerschicht 2 als Vorverbund bestehend aus dem Trägermaterial 9 und einer Außenschicht 6 gebildet wird, wobei die Außenschicht 6 aus einer Schicht aus Haftvermittler 7 und einer Trennschicht 8 gebildet wird und dass anschließend auf die Außenschicht 6 durch Kaschieren, Lackieren oder Extrudieren die Siegelschicht 3 aufgebracht wird.

19. Verfahren nach Anspruch 17 oder 18, **dadurch gekennzeichnet, dass** innerhalb der Siegelschicht 3 durch Einstanzen, Durchstanzen oder mittels Laser Sollbruchstellen 4 erzeugt werden.

20. Verfahren nach Anspruch 17 oder 18, **dadurch gekennzeichnet, dass** die Sollbruchstellen 4 durch Siegelwerkzeuge unter Anwendung von Druck und erhöhter Temperatur erzeugt werden, wobei im Bereich der Sollbruchstellen eine materialmäßige Verdrängung der Siegelschicht erfolgt.

21. Verwendung eines Verbundmaterials nach einem der Ansprüche 1 bis 16 zur Herstellung von Verpackungsmaterialien.

22. Verwendung nach Anspruch 21, **dadurch gekennzeichnet, dass** das Verpackungsmaterial eine Deckelplatine 16 zum Verschließen von Behältern 17, wie Joghurtbehältern, ist.

23. Verwendung nach Anspruch 22, **dadurch gekennzeichnet, dass** die Deckelplatine 16 mit einer Grifflasche 19 versehen ist, mit welcher der Öffnungsmechanismus eingeleitet wird, sodass eine Trennzone 5 zwischen Trägerschicht 2 und Siegelschicht 3 erzeugt und die Sollbruchstellen 4 für die Ausbildung einer Entnahmeöffnung 18 einreißen.

## Claims

1. Composite material 1 comprising a carrier layer 2 and a sealing layer 3, the carrier layer 2 being detachably connected to the sealing layer 3, **characterized in that** to form a separation zone 5 between the carrier layer 2 and the sealing layer 3, at least the surface region 2' of the carrier layer 2 that borders the sealing layer 3 comprises non-polar substances and at least the surface region 3' of the sealing layer 3 that borders the carrier layer 2 comprises polar substances or that at least the surface region 2' of the carrier layer 2 that borders the sealing layer 3 comprises polar substances and at least the surface region 3' of the sealing layer 3 that borders the carrier layer 2 comprises non-polar substances.

2. Composite material according to claim 1, **characterized in that** the carrier material 9 for forming the carrier layer 2 is present as a monomaterial having a layer thickness of 7-150 µm, preferably 20-70 µm.

3. Composite material according to claim 1, **characterized in that** the carrier material 9 for forming the carrier layer 2 is present as a composite having a layer thickness of 20-150 µm, preferably 50-70 µm.

4. Composite material according to one of claims 1 to 3, **characterized in that** the carrier layer 9 is printed on one and/or both sides.

5. Composite material according to one of claims 1 to 4, **characterized in that** the sealing layer 3 is present as a monomaterial having a layer thickness of 15-150 µm, preferably 30-70 µm.

6. Composite material according to one of claims 1 to 4, **characterized in that** the sealing layer 3 is present as a composite having a total thickness of 20-250 µm, preferably 30-70 µm.

7. Composite material according to one of claims 1 to 6, **characterized in that** the sealing layer 3 has additives, such as dyes and/or fillers.

8. Composite material according to one of claims 1 to 7, **characterized in that** the sealing layer 3 has predetermined breaking points 4 in the form of surface punches, through punches or holes.

9. Composite material according to one of claims 1 to 8, **characterized in that** the sealing layer 3 on its outside has spacers 12 with rough surfaces.

10. Composite material according to one of claims 1 to 8, **characterized in that** the sealing layer 3 has embossing bridges 12' on its outside.

11. Composite material according to one of claims 1 to 10, **characterized in that** the carrier material 9 has an outside layer 6 with a separating layer 8.

12. Composite material according to claim 11, **characterized in that** to form the carrier layer 2, the separating layer 8 is connected to the carrier material 9 by way of an adhesive 7.

13. Composite material according to claim 11 or 12, **characterized in that** the separating layer 8 in at least the surface region 8' bordering the sealing layer 3 consists of non-polar substances and the sealing layer 3 on at least the surface region 3' bordering the separating layer 8 consists of polar substances.

14. Composite material according to claim 11 or 12, **characterized in that** the separating layer 8 in at least the surface region 8' bordering the sealing layer consists of polar substances and the sealing layer 3 on at least the surface region 3' bordering the separating layer 8 consists of non-polar substances.

15. Composite material according to one of claims 1 to 14, **characterized in that** as non-polar substances, polyethylene, polypropylene, and their non-polar copolymers and non-polar derivatives are selected.

16. Composite material according to one of claims 1 to 15, **characterized in that** as polar substances, polyethylene terephthalate, polyamide and aluminium are selected.

17. Process for producing a composite material according to the invention according to one of claims 1 to 16, **characterized in that** the sealing layer 3 is applied to the carrier layer 2 by lacquering and/or lamination and/or extrusion.

18. Process for producing a composite material according to the invention according to one of claims 1 to 16, **characterized in that** the carrier layer 2 is formed as a precomposite consisting of the carrier material 9 and an outer layer 6, the outer layer 6 being formed from a layer of adhesive 7 and a separating layer 8 and wherein then the sealing layer 3 is applied to the outer layer 6 by lamination, lacquering or extrusion.

19. Process according to claim 17 or 18, **characterized in that** within the sealing layer 3, predetermined breaking points 4 are produced by punching in, punching through or by means of lasers.

20. Process according to claim 17 or 18, **characterized in that** the predetermined breaking points 4 are produced by sealing tools using pressure and elevated temperature, material displacement of the sealing layer taking place in the region of the predetermined breaking points.

21. Use of a composite material according to one of claims 1 to 16 to produce packaging materials.

22. Use according to claim 21, **characterized in that** the packaging material is a cover plate 16 for the closure of containers 17, such as yoghurt containers.

23. Use according to claim 22, **characterized in that** the cover plate 16 is provided with a gripping tab 19, with which an opening mechanism is initiated so that a zone of separation 5 is formed between carrier layer 2 and sealing layer 3 and the predetermined breaking points 4 for the formation of a removal opening 18 tear.

## Revendications

1. Matériau composite 1 comprenant une couche support 2 et une couche de scellement 3, la couche support 2 étant reliée de manière dissociable à la couche de scellement 3, **caractérisé en ce que**, pour réaliser une zone de séparation 5 entre la couche support 2 et la couche de scellement 3, au moins la partie surfacique 2' de la couche support 2 qui est contiguë à la couche de scellement 3 comprend des substances non polaires et au moins la partie surfacique 3' de la couche de scellement 3 qui est contiguë à la couche support 2 comprend des substances polaires ou qu'au moins la partie surfacique 2' de la couche support 2 qui est contiguë à la couche de scellement 3 comprend des substances polaires et au moins la partie surfacique 3' de la couche de scellement 3 qui est contiguë à la couche support 2 comprend des substances non polaires.

2. Matériau composite selon la revendication 1, **caractérisé en ce que** le matériau support 9 destiné à constituer la couche support 2 se présente sous forme d'un mono-matériau ayant une épaisseur de couche de 7 à 150 µm, de préférence 20 à 70 µm.

3. Matériau composite selon la revendication 1, **caractérisé en ce que** le matériau support 9 destiné à constituer la couche support 2 se présente sous forme d'un composite ayant une épaisseur de couche de 20 à 150 µm, de préférence 50 à 70 µm.

4. Matériau composite selon une des revendications 1 à 3, **caractérisé en ce que** le matériau support 9 est imprimé d'un et/ou des deux côtés.

5. Matériau composite selon une des revendications 1 à 4, **caractérisé en ce que** la couche de scellement 3 se présente sous forme d'un mono-matériau ayant une épaisseur de couche de 15 à 150 µm, de préférence 30 à 70 µm.

6. Matériau composite selon une des revendications 1 à 4, **caractérisé en ce que** la couche de scellement 3 se présente sous forme d'un composite ayant une épaisseur totale de 20 à 250 µm, de préférence 30 à 70 µm.

7. Matériau composite selon une des revendications 1 à 6, **caractérisé en ce que** la couche de scellement 3 présente des additifs, comme des colorants et/ou des agents de charge.

8. Matériau composite selon une des revendications 1 à 7, **caractérisé en ce que** la couche de scellement 3 présente des points destinés à la rupture 4 sous forme de découpes, perforations ou trous.

9. Matériau composite selon une des revendications 1 à 8, **caractérisé en ce que** la couche de scellement 3 comporte sur sa face extérieure des écarteurs à surface rugueuse 12.

10. Matériau composite selon une des revendications 1 à 8, **caractérisé en ce que** la couche de scellement 3 présente sur sa face extérieure des bandes gaufrées 12'.

11. Matériau composite selon une des revendications 1 à 10, **caractérisé en ce que** le matériau support 9 présente une couche extérieure 6 dotée d'une couche séparatrice 8.

12. Matériau composite selon la revendication 11, **caractérisé en ce que**, pour réaliser la couche support 2, la couche séparatrice 8 est reliée par un promoteur d'adhérence 7 au matériau support 9.

13. Matériau composite selon la revendication 11 ou 12, **caractérisé en ce que** la couche séparatrice 8 consiste, du moins dans la partie surfacique 8' contiguë à la couche de scellement 3, en substances non polaires et la couche de scellement 3, du moins dans la partie surfacique 3' contiguë à la couche séparatrice 8, en substances polaires.

14. Matériau composite selon la revendication 11 ou 12, **caractérisé en ce que** la couche séparatrice 8 consiste, du moins dans la partie surfacique 8' contiguë à la couche de scellement 3, en substances polaires et la couche de scellement 3, du moins dans la partie surfacique 3' contiguë à la couche séparatrice 8, en substances non polaires.

15. Matériau composite selon une des revendications 1 à 14, **caractérisé en ce que** sont sélectionnés comme substances non polaires le polyéthylène, le polypropylène et leurs copolymères non polaires et dérivés non polaires.

16. Matériau composite selon une des revendications 1 à 15, **caractérisé en ce que** sont sélectionnés comme substances polaires le téréphtalate de polyéthylène, le polyamide, de même que l'aluminium.

17. Procédé de fabrication d'un matériau composite selon l'invention selon une des revendications 1 à 16, **caractérisé en ce que** la couche de scellement 3 est appliquée sur une couche support 2 par vernissage et/ou placage et/ou extrusion.

18. Procédé de fabrication d'un matériau composite selon l'invention selon une des revendications 1 à 16, **caractérisé en ce que** la couche support 2 est réalisée sous forme d'un pré-composite composé du matériau support 9 et d'une couche extérieure 6, la couche extérieure 6 étant composée d'une couche d'agent adhésif 7 et d'une couche séparatrice 8, et que la couche de scellement 3 est ensuite appliquée par vernissage et/ou placage et/ou extrusion sur la couche extérieure 6.

19. Procédé selon la revendication 17 ou 18, **caractérisé en ce que** des points destinés à la rupture 4 sont créés par découpe, perforation ou au laser dans la couche de scellement 3.

20. Procédé selon la revendication 17 ou 18, **caractérisé en ce que** des points destinés à la rupture 4 sont créés par des outils de scellement en utilisant de la pression et une température accrue, un refoulement de la matière de la couche de scellement se produisant au niveau des points destinés à la rupture.

21. Utilisation d'un matériau composite selon une des revendications 1 à 16 pour fabriquer des matériaux d'emballage.

22. Utilisation selon la revendication 21, **caractérisée en ce que** le matériau d'emballage est une platine de couvercle 16 permettant de fermer des pots 17 comme des pots de yaourt.

23. Utilisation selon la revendication 22, **caractérisée en ce que** la platine de couvercle 16 est pourvue d'une languette de préhension 19 qui permet d'initier le mécanisme d'ouverture, de sorte qu'une zone de séparation 5 est créée entre la couche support 2 et la couche de scellement 3 et que les points destinés à la rupture 4 se déchirent pour réaliser un orifice de prélèvement 18.
